# EUROPEAN PATENT SPECIFICATION

(11) **EP 3 936 455 B1**
(45) Date of publication and mention of the grant of the patent: **23.11.2022**
(21) Application number: 20184787.8
(22) Date of filing: 08.07.2020
(51) Int. Cl.: B65D 47/06, B05C 17/005, B65D 83/00, B65D 65/46

(54) **CARTRIDGE AND CARTRIDGE ASSEMBLY FOR USE IN AN EXTRUSION GUN**
PATRONE UND PATRONENANORDNUNG ZUR VERWENDUNG IN EINER EXTRUSIONSPISTOLE
CARTOUCHE ET ENSEMBLE DE CARTOUCHE DESTINÉS À ÊTRE UTILISÉS DANS UN PISTOLET D'EXTRUSION

(43) Date of publication of application: 12.01.2022
(73) Proprietor: SOUDAL, 2300 Turnhout (BE)
(72) Inventor: THYS, Luc, 2550 Kontich (BE); MONSIEUR, Anneleen, 2180 Ekeren (BE); GEBOES, Peter, 2630 Aartselaar (BE); MILONTON, Jens, 2550 Kontich (BE); AELVOET, Jasper, 2140 Borgerhout (BE); VANDEVENNE, Brecht, 2060 Antwerpen (BE); DE CLERCQ, Sander, 2140 Borgerhout (BE)
(74) Representative: Nederlandsch Octrooibureau

(56) References cited:
- DE-U1- 8 706 659
- GB-A- 1 119 244
- GB-A- 2 455 372
- US-A- 2 891 714

## Description

### Field of the invention

The present invention relates to a disposable cartridge for use with an extrusion gun. The cartridge comprises a hollow tubular body and a piston displaceable provided in the tubular body along a cartridge wall. The present invention further relates to a cartridge assembly comprising a cartridge as described above and a flexible bag provided in the tubular body containing contents to be expelled from the cartridge using the extrusion gun.

### Background art

Any discussion of the prior art throughout the specification should in no way be considered an admission that such prior art is widely known or forms part of the common general knowledge in the field.

Construction materials, such as caulk, sealant, grout or adhesive, are often supplied in cartridges having a plastic body. The disposal and recycling of these cartridges when (nearly) empty or expired are not straightforward. They end up in the household/office plastic packaging garbage, and this stands in the way of a recycling process that is sustainable for the future. Additionally, the cartridges retain their shape, resulting in a large volume of waste. The leftover contents in the disposed cartridge is one problem in the recycling process. Most of the disposed cartridges still contain bits of fastening materials, and they can obstruct the machines in the recycling process.

However, in a professional setting, it is known to supply cartridge bags separately. The practice of manually installing the cartridge bags in the interior of a tubular body of the cartridge is not widespread due to the many challenges in safely and effectively using the cartridge bags, also known as foil packs, tubular bags, foil bags or film tube bags, especially in a home environment or by non-professional users and/or do-it-yourself-ers (DIYers). For example, handling of construction fastening materials requires care both during instalment of a cartridge bag and with regard to using the cartridge after installing the cartridge bag. To ensure a long shelf-life, cartridge bags should be transported and stored securely, and for safety they should be kept out of reach of children and animals. Moreover, cartridge bags may cause damage to surfaces within the home and spillages should be avoided to avoid damage to clothing and household items.

Further difficulties may be encountered in ensuring that the cartridge bags are installed safely and correctly. The practice of manually opening cartridge bags is not widespread due to the many challenges in safely and effectively using the cartridge bags, especially in a home environment. Cutting open the cartridge bags too wide may pose risks of leakage and cartridge contamination. Cutting open the cartridge bags too narrow may pose risks of having an inefficient and ineffective product, causing problems relating to the extrusion process (e.g. flow) of the product being too slow or requiring an excessive amount of force.

Despite a desire to reduce the plastic waste generated by discarding (nearly) empty or expired cartridges, and a desire to reduce the costs and resources required to manufacture and ship construction fastening products, cartridge assemblies that are suitable and convenient for use in domestic and professional settings are not widely available.

The present inventors have been able to solve many of the problems associated with conventional construction fastening products and have been able to develop a tubular cartridge for use with an extrusion gun (or other mechanism) that can overcome many of the above problems. US Patent No. 6,234,348 discloses such an extruding mechanism for a tubular bag and a method of extruding the contents of a tubular bag, by which a sealing material or the like is extruded and discharged from the tubular bag with an extruding gun for cartridges. Classical cartridges are illustrated in documents GB2455372A or DE8706659U

An object of the present invention may be to provide a cartridge for use with an extrusion gun, that overcomes the above mentioned disadvantages associated with current construction materials.

It may be another object of the invention to provide a cartridge that allows the user to safely and reliably discard of the tubular body for recycling separately from other parts of the cartridge.

It may be another object of the invention to provide a cartridge assembly for use in an extrusion gun comprising a cartridge and an associated cartridge cap that can be simply and reliably coupled to each other.

It may be another object of the invention to provide a cartridge assembly for use with an extrusion gun comprising a cartridge and an associated cartridge cap configured to open a cartridge bag provided in the cartridge and overcome the above mentioned disadvantages associated with current construction fastening products that provide means for opening a cartridge bag comprised in a tubular body of the cartridge.

It may be yet another object of the invention to provide a cartridge assembly for use in an extruding gun comprising a cartridge and an associated cartridge cap that allow for safe and reliable extrusion of a construction fastening material from a cartridge bag comprised in a tubular body of the cartridge.

These and other objects may be accomplished by the invention described in the following text and figures.

### Summary of the invention

In a first aspect, which can occur in combination with the other aspects and embodiments of the invention which are described herein, the present invention relates to a disposable cartridge for use with an extrusion apparatus, e.g. a standard extrusion gun for cartridges. The cartridge comprises a hollow tubular body, with for example a length of about 237 mm and an inner diameter of about 48 mm or about 428 mL in volume (other sizes, lengths, diameters and volumes can be understood from the description below), configured to receive a flexible bag containing contents to be expelled from the cartridge, wherein the body comprises a cartridge wall extending in a longitudinal direction. The cartridge further comprises a piston provided in the tubular body at the proximal end, the piston being sealably displaceable along a cartridge wall in the longitudinal direction. In other words, a disposable cartridge for use with an extrusion gun, comprising a tubular body extending along a longitudinal axis for receiving a flexible bag, and adapted to expel the contents of the flexible bag by a piston or a movable bottom or partition provided in the tubular body.

An advantage is that the cartridge bag or flexible bag, which is normally only available to professional users and which requires a special extrusion apparatus, can be available to DIY-ers by packaging the cartridge bag in the cartridge.

Furthermore, the tubular body is substantially made of a sustainable material, e.g. a paper-based material that may be reinforced with for example fibres, and adapted such that a main part thereof, substantially made of a paper-based material, is easily removable from the cartridge cap, e.g. the tubular body may be adapted to be divided into a proximal portion and a distal portion. Examples of paper-based material are paperboard or cardboard

Moreover, dismantling the tubular body into for example a proximal portion and a distal portion allows for separation of a content-contaminated portion, i.e. the proximal portion, from a non-contaminated part, i.e. the distal portion. In particular, in a cartridge assembly, i.e. when a cartridge cap is attached to the distal portion, the cartridge cap may be easily separated from the content-contaminated portion of the cartridge. Another advantage of the tubular body, substantially made of a sustainable material, compared to a plastic body is that the consumer can be more efficiently informed about the use and advantages of the product, and that the presentation in stores and store shelves can be improved. A paper-based material may allow to be printed. Advantages thereof will be clearer in the detailed description.

The tubular body is adapted such that the main part thereof is manually removable from the cartridge by a user, without the use of external tools, such as scissors, knives, hammers or other cutting or breaking tools. For example, the tubular body, or the main part thereof, may be formed as an unwindable helically-wound tube.

Furthermore, the tubular body comprises means to remove the main part manually. In the case of the helically-wound tube, the tubular body may comprise means to aid the reversal of the windings or twisting, for example a lip may be provide at an end of the helically-wound tube or a tear line or strip may be provide between the windings.

The paper-based material may be any one or combination of recycled paperboard, recycled cardboard, virgin paperboard and virgin cardboard. Due to the use of regenerative raw materials in the form of cardboard or paperboard, the cartridge in accordance with the invention satisfies the demands of environmental compatibility and sustainability.

Furthermore, the sustainable material is any one or combination of paper-based, biobased, bioplastic, biodegradable, compostable, renewable and recycled material (recycled plastic). Preferably the sustainable material is biodegradable, biodegradable in soil, biodegradable in fresh water, biodegradable in salt water, non-toxic, industrially compostable and/or home compostable. Furthermore, the sustainable material may be formed by any one or combination of the preferred materials mentioned below.

In a preferred embodiment the sustainable material is biodegradable according to European standard EN14995: 2007 and/or according to international standard ISO 14855, preferably where the sustainable material is biodegradable according to European standard EN14995: 2007. In another preferred embodiment the sustainable material is biodegradable in the soil according to French standard NF U 52-001. In another preferred embodiment the sustainable material is biodegradable in fresh water according to European standard EN 14987. In another preferred embodiment the sustainable material is biodegradable in salt water according to Austrian standard OK Biodegradable Marine.

In a preferred embodiment the sustainable material is non-toxic according to European standard EN 13432 and/or international standard OECD 208.

In a preferred embodiment the sustainable material is industrially compostable according to international standard ISO 17088 and / or according to European standard EN 13432.

In a preferred embodiment the sustainable material is home compostable according to European standard EN14995: 2007 and / or Australian standard AS 5810-2010 and/or according to French standard AFNOR NF T 51-800 (2015), preferably where the sustainable material is home compostable according to European standard EN14995: 2007.

In a first embodiment, which can occur in combination with the other aspects and embodiments of the invention which are described herein, the tubular body comprises means to separate the distal portion and the proximal portion from each other. The separation means may comprise a tear strip releasably connecting the proximal portion and the distal portion along a circumferential or peripheral direction.

In embodiments, the present invention relates to the cartridge as described above, wherein a width W of the tear strip in the longitudinal direction may range from about 0.1 mm to about 50 mm, preferably ranges from about 10 mm to about 30 mm, more preferably is about 20 mm, wherein the size of the proximal portion in the longitudinal direction ranges from about 150 mm to about 250 mm, preferably ranges from about 175 mm to about 200 mm, more preferably is about 190 mm, or wherein the size of the distal portion in the longitudinal direction ranges from about 0.1 mm to about 30mm, preferably ranges from about 10 mm to about 20 mm, more preferably is about 15 mm.

In other embodiments, the piston may comprise an opening configured for accommodating a proximal end of the cartridge bag, preferably the proximal end of the cartridge bag being sealed/closed with a sealing/closing means. The opening in the middle in the piston allows, for example, a metal clamp for sealing/closing the proximal end of the cartridge bag to fit into said opening and, thus, ensuring that the cartridge bag remains centered in the tubular body. Further advantages of the piston can be understood from the description below.

In other embodiments, the present invention relates to the cartridge as described above, the cartridge comprises indication marks formed on an outer surface of the tubular body, wherein the marks are associated with instructions to divide the tubular body into a proximal portion and a distal portion, or indicate the location of the means to separate the distal portion and the proximal portion from each other.

In some embodiments, which can occur in combination with the other aspects and embodiments of the invention which are described herein, the tubular body comprises means to prevent displacement of the piston through the open proximal end of the tubular body. In some other embodiments, which can occur in combination with the other aspects and embodiments of the invention which are described herein, the open proximal end of the tubular body is configured to at least enable the cartridge to be stored in an up-right position. This allows for efficiently making use of storage space for cartridges during transport, display on shelves and/or warehouse storing.

In a further aspect, which can occur in combination with the other aspects and embodiments of the invention which are described herein, the present invention relates to a cartridge assembly comprising a cartridge according to any one of the preceding claims, and a flexible bag containing contents to be expelled from the cartridge provided in the tubular body. The contents of the flexible bag may contain at least one of the group containing caulk, sealant, grout and adhesive. In a preferred embodiment, the flexible bag contains silicon.

According to an embodiment, the present invention relates to the cartridge as described above, wherein the cartridge assembly further comprises a cartridge cap sealably connected to the proximal portion, wherein the cartridge is configured to allow expulsion of the contents through an opening in the cartridge cap by displacement of the piston. The cartridge cap comprises a plurality of rods extending in the longitudinal direction from an inner surface of the cap, wherein at least one piercing rod of the plurality of rods is adapted to pierce the flexible bag when the flexible bag is pressed against the at least one rod by displacement of the piston.

With the accompanying cartridge cap, the cartridge can be much more convenient for the DIY-ers. For example, the DIY-ers no longer have to cut a tube or a bag, which is safer and one operation less, and the DIY-ers stay in their comfort zone by using the cartridge with an extrusion apparatus, such as their cartridge gun.

According to a further embodiment, the present invention relates to the cartridge as described above, wherein the plurality of rods consists of piercing and blunt rods having tips with different sharpness and/or at least two of the plurality of rods extend to different longitudinal positions in the longitudinal direction, i.e. at least one rod will protrude further into the cartridge body compared to at least another rod when the cartridge cap is mounted on the distal end of the cartridge body. For example, when the at least two of the plurality of rods extend from the same initial longitudinal position, than the at least two of the plurality of rods will have different lengths.

Sharpness can be measured as a radius of curvature, e.g., using scanning electron microscopy, SEM. In embodiments, the tip of a piercing rod has a radius of curvature less than about 50 nanometers. The radius of curvature can be equal to or less than about 50, 40, 30, 20, 10, 5, or 3 nanometers; and/or equal to or greater than about 3, 5, 10, 20, 30, or 40 nanometers. Additionally or alternatively, sharpness can be measured as a force required by a piercing rod to pierce open the flexible bag can be equal to or less than about 90, 80, 60, 40, 20, 10, 5 or 4 N. Said force may be measured by one or more force sensors. Additionally or alternatively, sharpness can be measured as a bevel angle, e.g., using a laser Goniometer. The bevel angle can be equal to or less than about 50, 40, 30, 20, 10 or 5 mm.

According to an embodiment, the present invention relates to the cartridge as described above, wherein the at least one piercing rod extends into the proximal portion of the tubular body.

In an even further aspect, which can occur in combination with the other aspects and embodiments of the invention which are described herein, the present invention relates to a method for disposal of a cartridge as described above. The method comprising the step of dividing the tubular body into a proximal portion and a distal portion.

### Brief description of the drawings

The invention will be explained in more detail below with reference to drawings in which illustrative embodiments thereof are shown. They are intended exclusively for illustrative purposes and not to restrict the inventive concept, which is defined by the appended claims.
Figure 1 shows a cross-sectional view of a cartridge assembly cartridge cap according to the present invention;
Figure 2 shows a perspective view of a cartridge of the cartridge assembly shown in Figure 1;
Figures 3A and 3B show respectively a cross-sectional view and a perspective view of a cartridge cap of the cartridge assembly shown in Figure 1;
Figures 4A and 4B show respectively cross-sectional views of a cartridge cap of a cartridge assembly according to the present invention;
Figure 5 shows a perspective view of a cartridge of the cartridge assembly shown in Figures 4A and 4B;
Figures 6A and 6B show respectively perspective views of a piston of a cartridge of the cartridge assembly shown in Figures 4A and 4B;
Figures 7A, 7b, 7C and 7D show respectively cross-sectional views of the piston of Figures 6A and 6B; and
Figures 8A, 8B and 8C show respectively cross-sectional views of a cartridge cap of the cartridge assembly shown in Figures 4A and 4B.

### Detailed description of the drawings

In the following, it should be noted that the term 'comprising' encompasses the terms 'consisting essentially of and 'consisting of. Where the term 'comprising' is used, the listed steps or options need not be exhaustive and further steps or features may be included. As used herein, the indefinite article 'a' or 'an' and its corresponding definite article 'the' means at least one, or one or more, unless specified otherwise.

It should be further noted that the term 'sealably' is used to describe an interaction between two surfaces creating a 'seal', which refers to making a tight, possibly airtight, enclosure. Thus, when two objects are 'sealably connected', a surface of the object is enclosed and tightly fastened or secured by a surface of a second object. When the first object is 'sealably displaceable' in the second object, the surface of the first object is enclosed in the surface of the second object, where the first object may be slidably displaced inside the second object while being tightly enclosed. Furthermore, the terms 'flexible bag' and 'cartridge bag' will be used interchangeably herein.

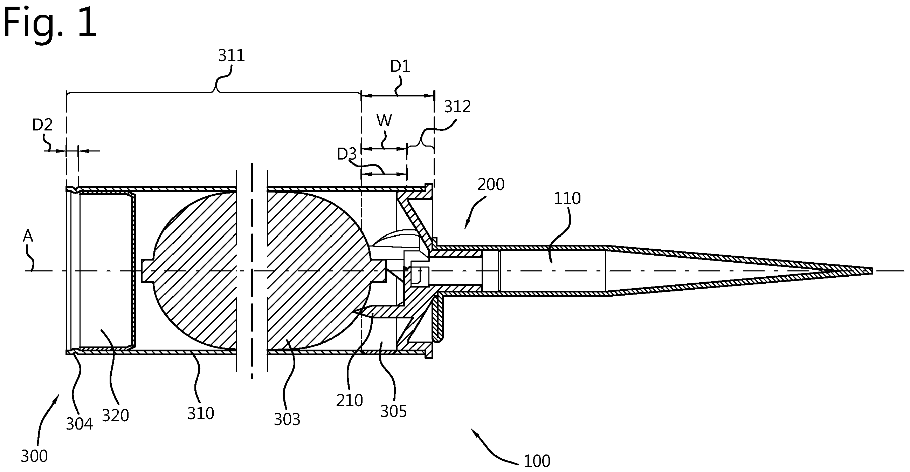

Fig. 1 shows a cartridge assembly 100 configured for use with an extrusion gun or other extrusion apparatuses, such as a standard cartridge gun. The cartridge assembly 100 comprises a cartridge 300 and a cartridge cap 200. The cartridge 300 comprises a tubular body 310 extending in a longitudinal direction. The tubular body 310 is generally hollow having two open ends: a proximal end and a distal end. A longitudinal axis A extends in the longitudinal direction from the open proximal end of the cartridge 300 through the distal end of the tubular body 310 and through the cartridge cap 200. The cartridge cap 200 is sealably connected to the cartridge 300, particularly to the tubular body 310, more particularly at the distal end of the tubular body 310. Thus, an outer surface of the cartridge cap 200 that is sealably connected to the cartridge 300 has a general shape that is similar to the inner shape of the tubular body 310.

The tubular body 310 may have an inner shape and an outer shape that are similar or different. For example, the outer shape may be one of a circle cylinder, triangle cylinder, square cylinder, pentagon cylinder, hexagon cylinder, octagon cylinder or other cylindrical shapes, and the inner shape may be one of a circle cylinder, triangle cylinder, square cylinder, pentagon cylinder, hexagon cylinder, octagon cylinder or other cylindrical shapes, wherein the inner shape and the outer shape are similar or different.

A nozzle 110 may be attached to an end of the cartridge cap 200. Here, the longitudinal axis A further extends through the nozzle 110. Alternatively, the nozzle 110 and the cartridge cap 200 may be formed as a single element. This may reduce the cost of manufacturing and may have a further advantage of increasing the length of the tube.

In the embodiment shown in Fig. 1, a piston 320 is provided between the proximal end of the tubular body 310 and the cartridge bag 303. Thus, by moving the piston 320 towards the cartridge bag 303, the pressure exerted through the piston 320 onto the cartridge bag 303 can deform the cartridge bag 303. In other words, the piston 320 may press the cartridge bag 303 onto cartridge cap 200. Contents of the cartridge bag 303 are provided for extraction from the cartridge bag 303. The piston 320 may be provided for applying pressure on one end (proximal end) of the cartridge bag 303 and allowing the extraction of the contents of the cartridge bag 303 from another end (distal end) of the cartridge bag 303, preferably the distal end of the cartridge bag 303 is or has been opened. The contents of the cartridge bag 303 may be extracted through the cartridge cap 200.

The distal end of the cartridge bag 303 is typically sealed/closed with a sealing/closing means, such as fastening (e.g. a metal/plastic clamp), tying (e.g. with a metal wire/strip, plastic wire/strip, fibre string, ...) or adhering (e.g., glue, heat, ...), which is opened prior to use or during use of the cartridge bag 303. This prevents spillage/leakage of the contents of the cartridge bag 303, and allows for better storage and transportation of the cartridge assembly 100 or cartridge 300. Moreover, sealing the cartridge bag 303 allows for improving the shelf-life of the cartridge bag 303 (resp. the cartridge 300 and the cartridge assembly 100). The proximal end of the cartridge bag 303 may be sealed/closed with a sealing/closing means similar to or different from the sealing/closing means of the distal end.

The cartridge cap 200 may comprise means to pierce open the cartridge bag 303. As previously described, a piston 320 may be provided to press the cartridge bag 303 onto the cartridge cap 200, thus allowing the cartridge bag 303 to be pierced and/or opened after a suitable force is applied onto/by the piston 320. Other means may be used to press the cartridge bag 303 onto the cap, thus allowing the piercing/opening means to pierce/open the cartridge bag 303 after a suitable pressure is applied at the piercing/opening means.

To provide a suitable force onto/by the piston 320, it may be pushed through the tubular body 310 by means of an extrusion apparatus, such as an extrusion gun, which may be manual, motorised or air-powered. Other extrusion means may also be used, such as manually pushing an object, such as a plunger, of suitable dimensions (i.e., diameter and length) into the tubular body 310 to able to reach the piston and of suitable structural strength to exert enough force onto the piston 320 to displace it.

The cartridge assembly 100 may further comprise a nozzle 110 configured to be attached to one end of the cartridge cap 200, particularly to a dispensing outlet 202 comprised in the cartridge cap 200, e.g. a cylindrical tube 202. The nozzle 110 may comprise a cylindrical conduit and a conical conduit extending along the longitudinal axis A, the cylindrical conduit having an open proximal end, wherein the proximal end of the cylindrical conduit in the nozzle 110 is connected to the cartridge cap 200. The conical conduit has a distal end that may be closed or open. The conical conduit of the nozzle 110 may be cylindrical or triangular. Furthermore, an exterior of the nozzle 110 may have a cylindrical-shape or a triangular spear-shape. Furthermore, any shape of the exterior of the nozzle 110 and the conical conduit of the nozzle 100 may be combined.

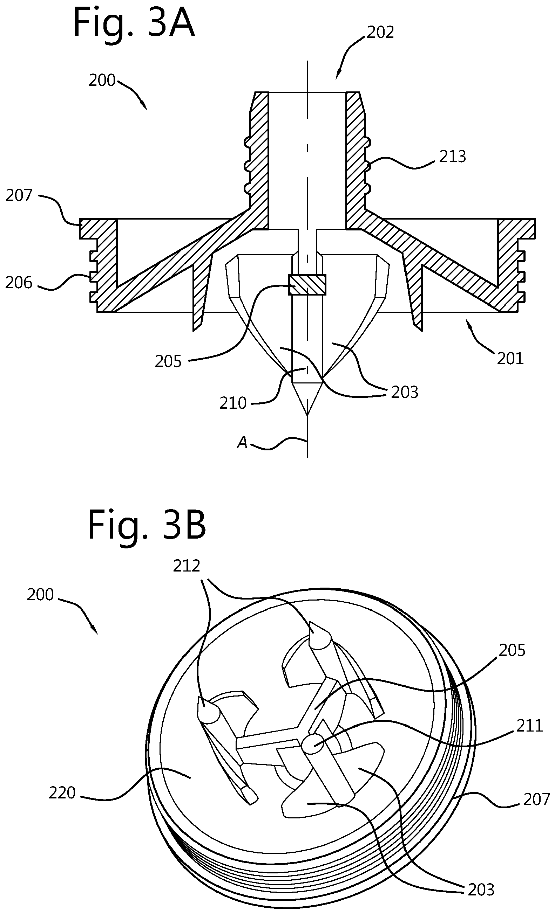

The cartridge cap 200 may comprise a cap body 201 (as shown in Figs. 3A, 4B and 8C) extending radially outward from the dispensing outlet 202 comprised in the cartridge cap 200, preferably extending along the longitudinal axis A. The cap body 201 may be configured to allow contents of a cartridge bag 303 in the cartridge 300 to be extracted there through. An advantage of the cap body 201 is to improve flow of material there through. The cap body 201 may be conical having a wide end (i.e., proximal end) and a narrow end (i.e.. distal end), wherein the wide end is provided in the tubular body 310 facing the cartridge bag 303 when the cartridge cap 200 is sealably connected to the cartridge 300. The narrow end of the cap body 201, preferably of the conical tube 201, may be sticking-out of the distal end of the tubular body 310.

The nozzle 110 may be a plastic nozzle, a metal nozzle or a paper/cardboard nozzle. The plastic and paper/cardboard nozzles may be provided with a closed distal end of the nozzle 110. The plastic and paper/cardboard nozzles may comprise at least one cutting line configured to be cut by the user. The at least one cutting line may be provided at an angle with respect to the longitudinal axis A between 0 and 60 degrees, preferably at 45 degrees. The paper/cardboard nozzle may be pre-cut or manufactured with an open distal end of the nozzle 110 with an angle from any of the previously disclosed angles. The metal nozzle has an open distal end of the nozzle 110, the open end having an angle from any of the previously disclosed angles.

Once the proximal end 311 is separated from the distal end 312 of the tubular body 310, the proximal end 311 may also be separated from the cartridge bag 303 and the cartridge cap 200. Furthermore, the proximal end 311 may be separated from the piston 320.

To inform the user regarding proper disposal of the cartridge, instructions in the form of written instructions or illustrations may be provided on the tubular body 310. The instructions are preferably printed on the outer surface of the tubular body 310. Providing disposal instructions on a surface of the cartridge 300 may be advantageous because such instructions will be visible when the cartridge 300 or cartridge assembly 100 is purchased or removed from the extrusion apparatus.

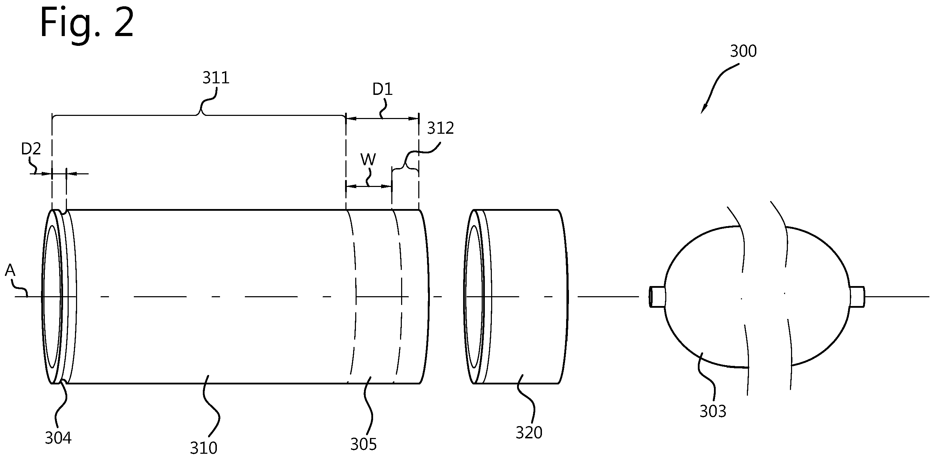

The cartridge 300 will now be described in more detail with reference to Figs. 1 and 2. The cartridge 300 described herein includes a number of improvements that may provide enhanced performance. The cartridge 300 may comprise an improved tubular body 310 and improved means of disposal. Each of these improvements will be described in more detail below. Moreover, it will be appreciated that the features described below may be incorporated in a cartridge assembly 100 alone, or in combination with other features of the cartridge cap 200 and/or the cartridge assembly 100 to provide a further improved product.

The tubular body 310 comprised in the cartridge 300 may be manufactured from a paper-based material, such as cardboard or paperboard. In this respect, the term cardboard means a material based on cellulose fibers or cellulose or groundwood pulp or recovered paper or combinations thereof which usually, but not necessarily, includes a plurality of layers of paper or board of different thickness and/or different material. These layers are frequently pressed with one another without the use of adhesive. One or both sides of the cardboard may be coated or painted in this respect. An example of paperboard or cardboard is kraft paper. The grammage of paperboard or cardboard amounts to between 80 and 600 g/m². Preferred grammage amounts to between 80 and 500 g/m², between 80 and 400 g/m², between 80 and 300 g/m², between 80 and 200 g/m², between 80 and 150 g/m², between 80 and 120 g/m², and between 80 and 100 g/m², as well as ranges between several combinations of the above-disclosed upper bounds (100, 120, 150, 200, 300, 400, 500, 600 g/m²), with the invention not being restricted to any of these weight ranges.

The tubular body 310 is configured to be divided into a proximal portion 311 and a distal portion 312. The tubular body 310 may comprise a separation means configured to separate the proximal portion 311 and the distal portion from each other. The separation means may be provided between the proximal portion and the distal portion. Thus, the proximal portion 311 and the distal portion 312 may be defined with respect to the separation means 305. The separation means 305 may comprise a tear line and/or a tear strip provided between the proximal portion 311 and the distal portion 312 along a circumferential direction. In some embodiments, the separation means 305 may be additionally provided in the longitudinal or axial direction of the tubular body 310. One advantage of a longitudinal separation means 305 is to improve the separation of the proximal portion 311 and the distal portion from each other. Another advantage is to improve the removal of the proximal portion 311 of the tubular body 310 from any other part of the cartridge 300.

The tear line may comprise perforations. Alternatively or additionally, the tear line may comprise a string or fibre which allows the tear line to be embedded in the tubular body 310. Examples are a punch line, tear punch line and so on.

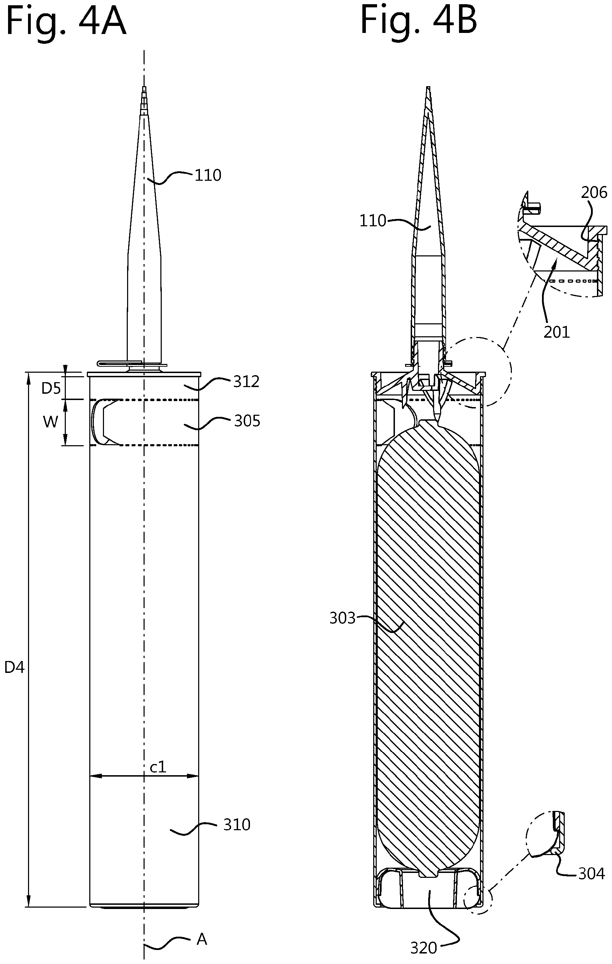

The tear strip may comprise a corrugated zipper or rip-up perforation. Alternatively or additionally, the tear strip may comprise of a polyethylene strip which allows the tear strip to be embedded in the tubular body 310. Other examples of a tear strip may be a tear tape, tear-off ribbon, and so on. To improve the use of the separation means 305, an edge of the tear line or tear strip may be provided as a gripping means, for example the edge of the tear line or tear strip may be sticking out of the tubular body 310 or may be configured to be bent to provide a gripping means, e.g. a flap (as shown in Figs. 4A and 4B). Alternatively or additionally, the edge of the tear line or tear strip may be gripped through a premade opening in the tubular body 310 or an opening made by pushing or bending the edge of the tear line or tear strip inwardly (e.g. pressing on the tubular body 310) such that the edge of the tear line or tear strip may be sticking to the inside of the tubular body 310 (e.g., a perforated or punched part may be pushed into the tubular body 310 forming a flap on the inside of the tubular body 310).

Fig. 2 shows a perspective view of a cartridge of the cartridge assembly according to the present invention A distance D1 can be defined between the distal end of the tubular body 310 and the separation means 305 (e.g. tear line), preferably the distal end of the separation means 305 (e.g., tear strip). The distance D1 is measured in the longitudinal direction, wherein D1 may be between 1 - 6 cm. Preferred distances are between 2 - 6 cm, between 3 - 6 cm, between 4 - 6 cm, between 5 - 6 cm, between 1 - 5 cm, between 1 - 4 cm, between 1 - 3 cm, between 1 - 2 cm, with the invention not being restricted to any of these distance ranges.

In embodiments, the separation means is a tear strip 305 having a width W which is measured in a longitudinal direction parallel to the longitudinal axis A. The width W may be between 0.01 and 5 cm. Preferred widths are between 0.01 and 2.5 cm, between 0.01 and 2 cm, between 0.01 and 1.5 cm, between 0.01 and 1 cm, and between 0.01 and 0.5 cm, as well as ranges between several combinations of the above-disclosed upper bounds (0.5, 1, 1.5, 2, 2.5, 3, 5 cm), with the invention not being restricted to any of these width ranges.

In embodiments, the separation means is a tear line having another width which is measured in the longitudinal direction. Said width may be between 0.1 and 10 mm. Preferred widths are between 0.1 and 8 mm, between 0.1 and 6 mm, between 0.1 and 4 mm, between 0.1 and 2 mm, between 0.1 and 1 mm, and between 0.1 and 0.5 mm as well as ranges between several combinations of the above-disclosed upper bounds (0.5, 1, 2, 4, 6, 8, 10 mm), with the invention not being restricted to any of these width ranges. Additionally or alternatively, perforations in the tear line may have a burst strength or TPI (teeth per inch or ties per inch) from 3-4 TPI 5-6 TPI, 7-10 TPI, 11-14 TPI or 15-18 TPI. Higher values of TPI provide higher resistance. The perforations may further have a cut (gap) / tie size of 0.5 - 2 mm, preferably 0.5 - 1.5 mm or 0.5 - 1 mm or ranges between several combinations of the above-disclosed upper bounds (1, 1.5, 2 mm), with the invention not being restricted to any of these width ranges. The perforations may further have a tooth size of 0.8 - 12 mm, preferably 0.8 - 10 mm, 0.8 - 8 mm, 0.8 - 6 mm, 0.8 - 4 mm, 0.8 - 2 mm, 0.8 - 1.5 mm or ranges between several combinations of the above-disclosed upper bounds (1.5, 2, 4, 6, 8, 10 mm), with the invention not being restricted to any of these width ranges.

Note that a length of the distal portion 312 of the tubular body 310 may be defined as the difference between the distance D1 and a width of any one or combination of widths of the tear strip and the tear line, for e.g. D1-W, wherein said length is measured in the longitudinal direction.

It must be noted that higher grammage of the tubular body 310 may increase the rigidity and/or stiffness of the body and/or increase tear strength of the tubular body 310 at the separation means 305. Larger width W of the tear strip 305 may increase the rigidity and/or stiffness of the tear strip. Thus, a combination of suitable grammage of the tubular body 310 and suitable width of the tear strip 305 may be desired. For example, a higher grammage with a larger width, such as 600 g/m2 for the tubular body 310 in combination with 3 cm for the tear strip 305, or a lower grammage with a smaller width, such as 80 g/m2 for the tubular body 310 in combination with 0.25 cm for the tear strip 305, or other combinations such as 400 g/m2 for the tubular body 310 in combination with 2 cm for the tear strip 305 or 200 g/m2 for the tubular body 310 in combination with 1 cm for the tear strip 305, with the invention not being restricted to any of these combinations of grammage of the tubular body 310 and width of the tear strip 305. Furthermore, the composition of the separation means 305 may additionally or alternatively influence its rigidity and/or stiffness. Thus, a combination of suitable grammage of the tubular body 310 and suitable composition of the separation means 305 may be desired. For example, a combination of a tear line and a tear strip may be suitable for a tubular body 310 having grammage of 300 g/m2 or more.

The piston 320 is provided at the proximal end of the tubular body 310 and is sealably displaceable along the longitudinal axis A from the proximal end towards the distal end of the tubular body 310. Thus, an outer surface of the piston 320 has a general shape that is similar to the inner shape of the tubular body 310. The piston 320 may be a hollow tube with two closed ends, an outer surface of both ends having a flat surface, preferably the outer surface of a distal end of the piston 320, which may be provided facing the proximal end of the cartridge bag 303 may be flat and the outer surface of a proximal end, which may be facing the proximal end of the tubular body 310 when the piston 320 is provided inside the tubular body 310, has grooves and/or protrusions, preferably in a shape complementary to a shape of an extrusion plate (e.g. of a plunger). Alternatively, the piston 320 may be a generally hollow tube with the proximal end being open or closed and the distal end being closed or open. In other words, the open end of the piston 320 is configured to allow the extrusion plate to fit into the open end of the piston 320. The outer surface of the proximal end of the piston 320 may have grooves and/or protrusions, preferably in a shape complementary to a shape of the extrusion plate. Additionally or alternatively, the outer surface of the proximal and/or distal end of the piston 320 may have a flat surface. In preferred embodiments, the distal end of the piston 320 may has a shape complementary to the shape of the proximal end of the cartridge bag 303. This can allow the piston 320 to push on the cartridge bag 303 ore effectively.

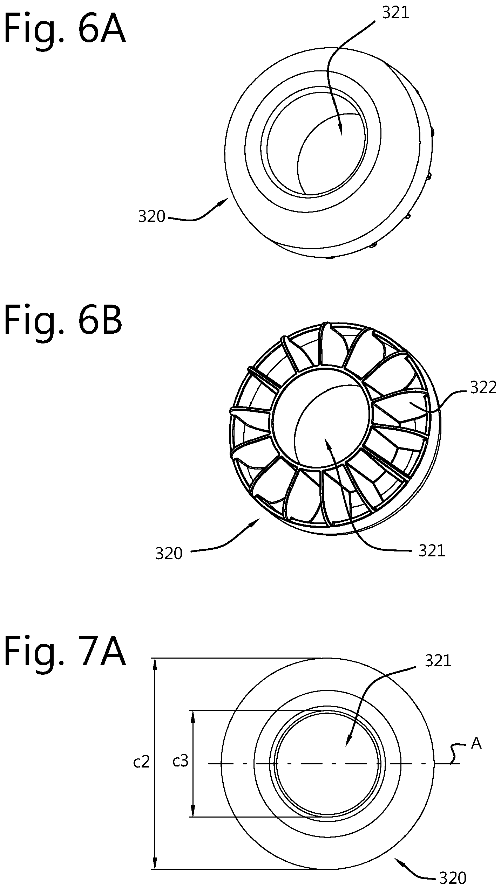

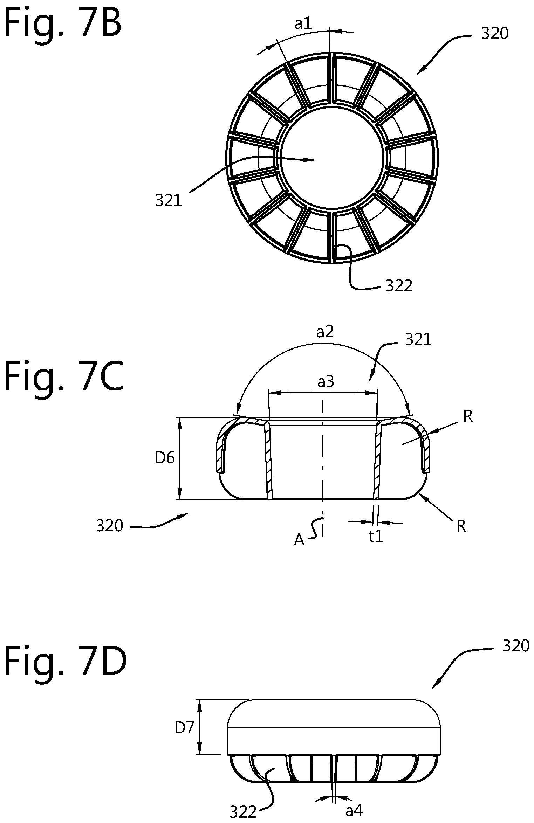

In embodiments, the piston 320 the piston 320 may be cylindrical with rounded edges. The rounded edges allow the piston to move smoothly in the tubular body 310 without getting stuck in the tubular body 310, causing the tubular body 310 to tear. In addition, the rounded edges ensure that the cartridge bag 303 can be emptied more effectively, and that the waste is reduced to a minimum. More details are provided below with reference to Figs. 6A, 6B, 7A, 7B, 7C and 7D.

An indentation 304 may be provided near or at the proximal end of the tubular body 310, preferably between the proximal end of the tubular body 310 and the piston 320. The indentation 304 provides a means of stopping/blocking the piston 320 from exiting the tubular body 310. The indentation 304 may be formed in a continuous line along the peripheral or circumferential direction. Alternatively, the indentation 304 may be formed in points along the same direction. A distance D2 can be defined between the proximal end of the tubular body 310 and the indentation 304. The distance D2 is measured in the longitudinal direction, wherein D2 may be up to 1 cm. Preferred distances are up to 1 cm, up to 0.9 cm, up to 0.8 cm, up to 0.7 cm, up to 0.6 cm, up to 0.5 cm, up to 0.4 cm, up to 0.3 cm, up to 0.2 cm, between 0.2 and 1 cm, between 0.3 and 1 cm, between 0.4 and 1 cm, between 0.5 and 1 cm, between 0.6 and 1 cm, between 0.7 and 1 cm, between 0.8 and 1 cm, between 0.9 and 1 cm, as well as ranges between several combinations of the above-disclosed lower/upper bounds, with the invention not being restricted to any of these distance ranges.

The cartridge 300 may comprise indication marks formed on an outer surface of the tubular body 310 as previously described. The indication marks indicate the steps to divide the tubular body into the proximal portion 311 and the distal portion 312, or indicate the location of the means to separate the distal portion and the proximal portion from each other.

The cartridge 300 may comprise a cartridge bag 303 in the tubular body 310. The cartridge bag 303 may be obtained by manufacturing so-called "sausages". The cartridge bag 303 may have an external diameter between 10 to 100 mm. Preferred diameters are between 10 and 20 mm, between 10 and 30 mm between 10 and 40 mm, between 10 and 50 mm, between 10 and 60 mm between 10 and 70 mm, between 10 and 80 mm, between 10 and 90 mm, between 20 to 100 mm, between 30 to 100 mm, between 40 to 100 mm, between 50 to 100 mm, between 60 to 100 mm, between 70 to 100 mm, between 80 to 100 mm, between 90 to 100 mm, as well as ranges between several combinations of the above-disclosed lower/upper bounds, with the invention not being restricted to any of these diameter ranges. The cartridge bag 303 may have a length in the longitudinal direction between 10 to 60 cm. Preferred lengths are between 10 and 20 cm, between 10 and 30 cm between 10 and 40 cm, between 10 and 45 cm, between 10 and 50 cm, between 10 and 55 cm, between 20 to 60 cm, between 30 to 60 cm, between 40 to 60 cm, between 45 to 60 cm, between 50 to 60 cm, between 55 to 60 cm, as well as ranges between several combinations of the above-disclosed lower/upper bounds with the invention not being restricted to any of these length ranges. The cartridge bag 303 may have a volume between 7.85 and 4712 mL. Other volume ranges of the cartridge bag 303 may be derived by multiplying *pi* with a length from the above-disclosed length ranges and with the square of half of a diameter from the above-disclosed diameters.

A length of the tubular body 310 in the longitudinal direction may be an addition of the above-disclosed sizes of the proximal portion 311 and the distal portion 312. In other words, the length of the tubular body 310 may range from about 150.1 mm to about 280 mm. Other ranges may be derived from the addition of any value in the ranges provided above for the proximal portion 311 (i.e., 150-250 mm, 175-200 mm, 190 mm, and so on) with any value in the ranges provided above for the distal portion 312 (i.e., 0.1-30 mm, 10-20 mm, 15 mm and so on). Furthermore, the tubular body 310, proximal portion 311 and distal portion 312 may have an internal diameter equal to or larger than any of the above-disclosed external diameter ranges of the cartridge bag 303. Different combinations of dimensions of cartridge 300 or the tubular body 310 (i.e., length, internal diameter, volume) and cartridge bag 303 (length, external diameter, volume) may considered, such that the cartridge 300 or the tubular body 310 accommodates the cartridge bag 303 (i.e., the dimensions of the cartridge bag 303 may smaller than or equal to the dimensions of the cartridge 300 or the tubular body 310, or the cartridge bag 303 having larger dimensions than the cartridge 300 or tubular body 310 may be deformed to fit in the cartridge 300 or the tubular body 310).

The cartridge 300 may comprise a cartridge bag 303 in the tubular body 310. The cartridge bag 303 may accommodate a paste-like material/content, such as caulk (e.g. rigid silicone, latex or acrylic substances), sealant (e.g. soft silicone or spackle putty), grout (e.g. cement) or adhesive (e.g. grab adhesive or cyanoacrylate),or any other material known in the art. The paste-like material/content in the cartridge bag 303 are provided for extraction from the cartridge bag 303.

The cartridge bag 303 may be provided in a material, such as metal, preferably aluminium foil, or Biaxially-oriented Polyethylene Terephthalate (BoPET), preferably Mylar^{®} or Melinex^{®} polyester film, or any other material known in the art suitable for contents of the cartridge bag 303 and/or suitable for use with the piston 320. The piston 320 may be provided in a material suitable for use with the cartridge bag 303 and/or the contents thereof. Example materials of the piston 320 are steel, aluminium, soft leather, impregnated leather, nitrile rubber, nylon, polyethylene, poly plastic, Polytetrafluoroethylene (PTFE), such as Teflon^{®}, or thermoplastic polyester elastomers, such as Hytrel^{®}, or any other material known in the art. For instance, a highly viscous content of the cartridge bag 303 (e.g. cold urethane or two-part epoxy) may require a piston 320 provided in a material with low friction properties (e.g. Teflon^{®}) to reduce the force applied by a user and improve the extrusion of said content. The piston 320 may formed by moulding, 3D printing, milling, sewing or other means known in the art.

A distance D3 can be defined between the widest end or proximal end of the cap body 201 and the separation means 305 (e.g. tear line), preferably the proximal end of the separation means 305 (e.g., tear strip). The distance D3 is measured in the longitudinal direction, wherein D3 may be up to 4 cm. Preferred distances are up to 3.5 cm, up to 3 cm, up to 2.5 cm, up to 2 cm, up to 1.5 cm, up to 1 cm, and up to 0.5 cm, as well as ranges between several combinations of the above-disclosed upper bounds (0.5, 1, 1.5, 2, 2.5, 3, 3.5, 4 cm), with the invention not being restricted to any of these distance ranges. In view of the above, the distance D3 may be equal to the width W of the tear strip as shown in Fig. 1.

The cartridge cap will now be described in more detail with reference to Figs. 3A-3B. The cartridge cap 200 described herein includes a number of improvements that may provide enhanced performance. The cartridge cap 200 may comprise improved pierce opening means and improved conical tube. Each of these improvements will be described in more detail below. Moreover, it will be appreciated that the features described below may be incorporated in a cartridge assembly 100 alone, or in combination with other features to provide a further improved product.

As shown in Fig. 3B, the cartridge cap 200 comprises means to pierce and/or open a cartridge bag 300 in a cartridge 300. Said piercing/opening means comprises a plurality of rods 210 extending in the longitudinal direction A from an inner surface 220 of the cap body 201, e.g. extending outwardly from the inner surface 220 of the cap body 201. At least one of the plurality of rods 210 may have a shape of a circle cylinder, triangle cylinder, square cylinder, pentagon cylinder, hexagon cylinder, octagon cylinder or other cylindrical shapes.

At least one of the plurality of rods 210 is adapted to pierce the cartridge bag 303 in the cartridge 300 when the cartridge bag 303 is pressed towards the cartridge cap 200. Several means of pressing the cartridge bag 303 onto the cartridge cap 200 having been previously described. The plurality of rods 210 can pierce the cartridge bag 303 after a suitable force is applied onto the cartridge bag 303. The suitable force may be equivalent to a force resulting from the plurality of rods 210 onto the cartridge bag 303.

The tips of at least two of the plurality of rods 210 have different sharpness. The plurality of rods 210 may consist of piercing and blunt rods having tips with different sharpness. The blunt rod(s) may have a blunt end 211 and the piecing rod(s) may have a sharp end 212, such as a moil point end or a conical end. Thus, an imbalanced pressure on the cartridge bag 303 is caused by the plurality of rods 210. In other words, there may be more pressure at the at least one sharp-ended rod 212, thereby allowing it to pierce the cartridge bag 303 more efficiently. Subsequently, the blunt-ended rod 211 may also open the cartridge bag 303.

In the embodiment of Fig. 3B, the plurality of rods 210 are arranged around the longitudinal axis A, preferably the plurality of rods 210 may be arranged symmetrically around the longitudinal axis A. In other words, the plurality of rods 210 are arranged on the inner surface 220 of the cap body 201 between the wide end and the narrow end of the cap body 201 or between the proximal end and the distal end of the cap body 201, preferably halfway between the two ends of the cap body 201. The plurality of rods 210 may be equally spaced from the longitudinal axis A. In other words, the plurality of rods 210 may be arranged circumferentially, preferably at an equal radial distance from the longitudinal axis A. The plurality of rods 210 may be equally spaced apart. In other words, the plurality of rods 210 may be arranged at an equal circumferential distance from each other.

In the embodiments of Figs. 3A-3B, it is shown that the plurality of rods 210 are extending in a longitudinal direction parallel to the longitudinal axis A, allowing the plurality of rods 210 to have a more effective angle of contact with the cartridge bag 303.

The cartridge cap may further comprise a bridge 205 mounted on the inner surface 220 of the cap body 201. In this respect, the term bridge means a structure mounted at a certain distance in the longitudinal direction over an opening, particularly the narrow end or distal end of the cap body 201. The bridge 205 may extend radially inward from the plurality of rods 210 and connect each of the plurality of rods 210. The bridge 205 may further extend in the longitudinal direction to a distance less than a size of the plurality of rods 210 in the longitudinal direction to allow the effective functioning of the plurality of rods 210 in piercing/opening the cartridge bag 303 without diminishing the functionality of the plurality of rods 210. When the cartridge bag 303, having a sealed end as previously described, is pressed onto the cartridge cap 200, the bridge is configured to block the sealed end of the cartridge bag 303 to clog the cap body 201, particularly the narrow end or distal end of the cap body 201.

The bridge 205 may be mounted on a plurality of points on the inner surface 220 of the cap body 201, preferably from where the plurality of rods 210 are extending. In the embodiment of Fig. 3B, it is shown that the bridge 205 radially extends from the longitudinal axis A to each of the plurality of rods 210 or vice versa connecting the plurality of rods 210.

In the embodiments of Figs. 3A-3B, the plurality of rods 210 may each comprise one or more side walls or wings 203. The one or more side walls or wings 203 may extend from each of the plurality of rods 210 outwardly (i.e., in a circumferential direction from each of the plurality of rods 210). The one or more side walls or wings 203 are configured to enlarge the piercing/opening formed in the cartridge bag 303 by the plurality of rods 210 when the cartridge bag 303 is pressed onto the cartridge cap 200.

Fig. 3B shows two side walls or wings 203 extending from sides of each of the plurality of rods 210 in opposite directions. In another example, the plurality of rods 210 may each have a side wall extending from another side of the plurality of rods 210 in an outwardly radial direction (i.e. in the direction from the longitudinal axis A to the widest end or proximal end of the cap body 201). The plurality of rods 210 may comprise the combination of the three side walls or wings 203 as described herein. The three side walls or wings 203 may be extending from different sides of each of the plurality of rods 210, wherein a first side wall is orthogonal to a second and third side wall, wherein the second and third walls extend in opposite directions.

The one or more side walls or wings 203 may extend towards the inner surface of the cap body 201. The one or more side walls or wings 203 may have a uniform thickness along the direction of extension. Alternatively, the thickness may increase or decrease along the extension direction of the one or more side walls or wings 203 (i.e., away from a rod).

Additionally or alternatively to a uniform or non-uniform thickness of the one or more side walls or wings 203, the one or more side walls or wings 203 may extend from each of the plurality of rods 210 outwardly having a uniform height (i.e., the height being measured in a direction in which the plurality of rods 210 extend, such as the longitudinal direction). Alternatively, the height may non-uniform, preferably decreasing along the extension direction of the one or more side walls or wings 203 (i.e., away from a rod).

The one or more side walls or wings 203 may extend circumferentially. Fig. 3B further shows that the two side walls or wings 203 extend around the longitudinal axis A. Thus, it is understood that one side wall of one rod of the plurality of rods 210 may extend radially in towards another side wall of another rod of the plurality of rods 210. It is preferred that the one side wall of one rod of the plurality of rods 210 may not intersect or meet another side wall of another rod of the plurality of rods 210. In other words, there may be an opening between the one side wall of one rod of the plurality of rods 210 and another side wall of another rod of the plurality of rods 210. This allows contents of the cartridge bag 303 to be extracted through the cap body 201 without any severe blocking by the one or more side walls or wings 203.

In the embodiments of Figs. 3A-3B, it is shown that the cartridge cap 200 comprises a dispensing outlet 202 extending in a longitudinal direction around the longitudinal axis A, e.g. a cylindrical tube extending from the narrow end or distal end of the cap body 201 along the longitudinal axis A. A proximal end of the dispensing outlet 202 may be connected to the narrow end or distal end of the cap body 201. The length of the dispensing outlet 202 in the longitudinal direction is a suitable length for a nozzle 110 to be connected thereto. Examples of a nozzle 110 have been previously described. The dispensing outlet 202 may comprise an outer surface having an outer thread 213 provided for sealably connecting the nozzle 110 thereto, e.g. a screw thread. In other words, the cylindrical conduit of the nozzle 110 may comprise an inner surface having an inner thread that is complementary to the outer thread of the dispensing outlet 202 of the cartridge cap 200.

In the embodiments of Figs. 3A-3B, it is shown that the cap body 201 is surrounded by an annular wall comprised in the cartridge cap 200. The annular wall may refer to the outer surface of the cartridge cap 200. The annular wall may extend in the longitudinal direction, wherein the cap body 201 extends radially inward from said annular wall to the outlet 202. The annular wall may have a general shape that is similar to the inner shape of the tubular body 310, as previously described. Furthermore, means for mounting of the cartridge cap 200 to the distal end of the cartridge body or tubular body 310 are provided on an outer surface of the annular wall. The annular wall or the mounting means may comprise outer rings 206 provided on an outer surface of the annular wall. The outer rings may be provided for sealably connecting the cartridge cap 200 to the cartridge 300. The outer rings 206 may be formed as circumferential channels or annular grooves. The outer rings 206 can allow the cartridge cap 200 to be pressure-fit itself into the cartridge 300 or tubular body 310, preferably to the distal portion 312, to prevent the cartridge cap 200 from falling out or falling off the cartridge 300 or tubular body 310.

Note that the dispensing outlet 202 of the cartridge cap 200 may be referred to as a neck of the cartridge cap 200, and the cap body 201 of the cartridge cap 200 may be referred to as a shoulder of the cartridge cap 200. For example, the nozzle 110 may be generally secured to the neck of the cartridge cap 200 by way of complementary screw threads on the neck and in the nozzle 110. For another example, the cartridge cap 200 may be generally secured to the tubular body 310 by way of outer ridges, outer threads and/or outer rings 206 in the annular wall of the shoulder of the cartridge cap 200.

Alternatively or additionally to the outer rings 206, the annular wall may comprise a flange 207 extending radially outward from said annular wall. Preferably the mounting means may comprise the flange 207. The flange 207 may have a diameter equal to or larger than a diameter of the annular wall. Note that the diameter of the annular wall is equal to or larger than a diameter of the widest end or proximal end of the cap body 201. The flange 207 is configured to limit/prevent the cartridge cap 200 from entering the tubular body 310 to/by a specific distance. Thus, the flange 207 allows for a correct positioning of the cartridge cap 200 when being sealably connected to the cartridge 300 or the tubular body 310, preferably to eh distal portion 312. Said specific distance can be measured as the difference between a distance defined between the widest end or proximal end of the cap body 201 and a separation means 305 in the tubular body 310 of the cartridge 300 (distance D3 as described above) and another distance defined between a proximal end of the tubular body 310 and the separation means 305 (distance D1 as described above).. The specific distance may be equal to or less than a length of a distal region 312 of the tubular body 310. The length of the distal region 312 of the tubular body 310 is described further in detail below.

The flange 207 may comprise a protrusion at a circumferential end of flange 207, wherein the protrusion forms an elbow with a distal portion of the elbow extending in the longitudinal direction. The flange 207 may further comprise ribs, threads and/or ridges. The elbow is configured to sealably connect the cartridge cap 200 to the tubular body 310 of the cartridge 300 such that the elbow encloses a portion of the tubular body 310. Said connection may be snap-on connection, a threaded connection, a connection by means of ribs and/or a connection by means of ridges, where the threads, ribs and/or ridges in the flange 207 are preferably complementary to the outer ridges, outer threads and/or outer rings 206 in the annular wall of the shoulder of the cartridge cap 200. The protrusion may be an annular protrusion and may refer to another annular wall formed around the outer surface of the cap body 201. Thus, the annular wall surrounding the cap body 201 and the annular protrusion may allow part of the distal portion 312 of the tubular body 310 to be sealably connected therein between. This would further improve the connection between the cartridge cap 200 and the cartridge 300.

Figs. 4A and 4B show respectively cross-sectional views of a cartridge cap of a cartridge assembly according to the present invention. The cartridge 300 and cartridge assembly 100 of Figs. 4A and 4B correspond in many aspects and/or features to the cartridge 300 and cartridge assembly 100 of Fig. 1. In the embodiment of Fig. 4A, the length in the longitudinal direction of the cartridge 300 is 237 mm and the length of the distal region 312 is 10 mm. Furthermore, the width W in the longitudinal direction of the tear strip 305 is 20.5 mm. It can be derived that the distance D1 is 30.5 mm, which is the sum of the length of the distal region 312 and the width W of the tear strip 305. Furthermore, the internal diameter of the cartridge 300 (and respectively the proximal region 311, distal region 312 and/or tearing means 305) is 48 mm. The cartridge bag 303 shown in Fig. 4B may have an external diameter equal to or less than the internal diameter of the cartridge 303 of 48 mm shown in Fig. 4A. Other dimensions (i.e., lengths, widths, diameters, ...) may be considered as described above.

In Fig. 4B, the cartridge 300, preferably the tubular body 310 comprises means 304 to prevent the displacement of the piston 320 through the open proximal end of the tubular body 310. Said prevention means 304 may be an indentation as described above and/or a protrusion at a circumferential end of the proximal portion 311, wherein the protrusion forms a shoulder with the proximal portion 311 extending inwardly (i.e., to the interior of the tubular body 310) in the radial direction.

As described above, the cartridge cap 200 may comprise a cap body 201. Preferably, the widest end or proximal end of the cap body 201 is provided at the interior of the cartridge wall (i.e., inner surface of the tubular body 310). This allows for better flow of material through the cap body 210 while reducing material that is blocked by the cartridge cap 200, for example by the annular wall of the cartridge cap 200 or the outer surface of the cartridge cap 200. In some embodiments, the distal portion 312 may comprise inner rings complementary to the outer rings 206 of the cartridge cap 200. The inner rings maybe formed as annular protrusions that are complementary to the annular grooves or the circumferential channels of the outer rings 206.

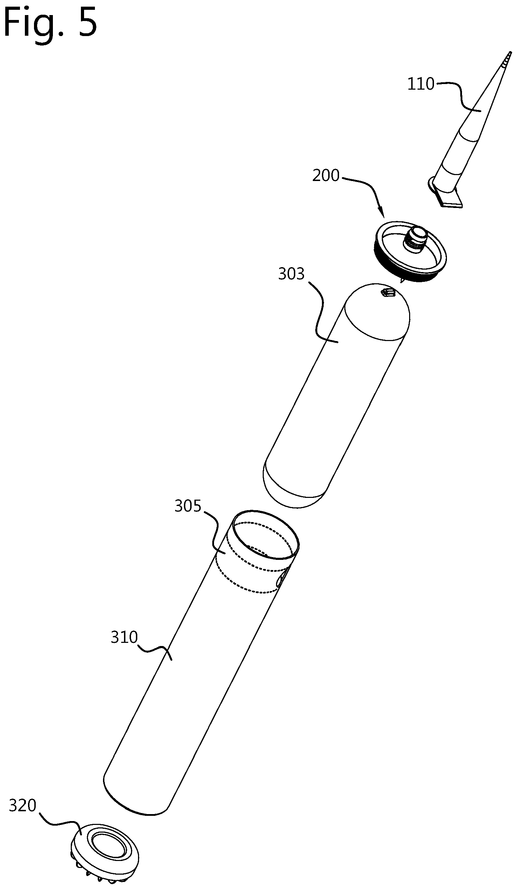

Fig. 5 shows perspective view of a cartridge cap of the cartridge assembly of Figs. 4A and 4B. The cartridge 300 and cartridge assembly 100 of Fig. 5 correspond in many aspects and/or features to the cartridge 300 and cartridge assembly 100 of Fig. 2, further including a cartridge cap 200 as described above, preferably further including a nozzle as described above. The nozzle 110 may comprise a gripping means, such as a latch to allow the user to more easily connect the nozzle 110 to the cartridge cap 200.

Figs. 6A and 6B show respectively perspective views of a piston of a cartridge of the cartridge assembly shown in Figures 4A and 4B. As described above, the outer surface of the piston 320 has a general shape that is similar to the inner shape of the tubular body 310. In Figs. 6A and 6B, the piston 320 has cylindrical with rounded edges, which similar to the cylindrical inner shape of the tubular body 310 shown in Fig. 5. This ensures that the piston 320 can be sealably displaceable along the longitudinal axis A, preferably through the tubular body 310.

The piston 320 may have rounded edges 323 (shown in more detail in Figs. 7C and 7D). Said rounded edges may be provided circumferentially or on the peripheral of the distal end and/or proximal end of the piston 320. Said rounded edges ensure that the piston 320 can tilt in the tubular body 310 due to uneven angular pushing motion of an extrusion plate (e.g. of a plunger of an extrusion gun). This prevents clogging of the piston 320 in the tubular body 310 and ensures that the piston can be sealably displaced to the distal portion 312 of the tubular body 310.

In embodiments, the piston 320 may have ribs 322 at the proximal end of the piston 320. The ribs 322 may be provided around the longitudinal axis and/or with said rounded edges 323. The ribs 322 allow for effective demoulding of pistons 320 formed by moulding (such as injection or rotational moulding). Alternatively or additionally, the piston 320 may be formed of two parts, a proximal part comprising the proximal end and a distal part comprising the distal end. Said parts may be combined by attaching/joining means, such as solvent bonding, vibration welding, induction welding, sewing or other types of attaching/joining means. Advantageously, the ribs 322 require less material to be formed while still providing a necessary structural support to the piston 320.

In Figs. 6A and 6B, the piston 320 comprises an opening 321 configured for accommodating the proximal end of the cartridge bag, preferably the proximal end of the cartridge bag being sealed/closed with a sealing/closing means. The opening 321 may be formed along the longitudinal axis A (i.e. in the center of the piston 320) or along a longitudinal direction parallel to the longitudinal axis. The opening 321 may be a depression or a hollowed out area in/at the distal end of the piston 320, or the opening 321 may be formed through the distal end to the proximal end of the piston 320 (e.g., a cylindrical or conical hole through the piston 320 in the longitudinal direction). The opening 321 is provided for accommodating the proximal end of the cartridge bag 303, preferably the proximal end of the cartridge bag 303 being sealed/closed with a sealing/closing means. For example, a metal clamp for sealing/closing the proximal end of the cartridge bag may be accommodated/fit into said opening 321. Advantageously, the piston 320 ensures that the cartridge bag 303 is properly positioned in the tubular body 310 (e.g. centered at the longitudinal axis A), and is properly displaced through the interior of the tubular body 310 (e.g. along the longitudinal axis A).

The following embodiments will be described with reference to Figs. 7A, 7B, 7C and 7D, which show respectively cross-sectional views of the piston 320 of Figs. 6A and 6B.

In the embodiment of Fig. 7A, the opening 321 has a diameter of about 23 mm or less. Other diameters of the opening 321 may be about 50 mm or less, 40 mm or less, 30 mm or less, and 10 mm or less. Fig. 7A shows the piston 320 having an external diameter of 46 mm. The piston 320 may have an external diameter equal to or less than any of the above-disclosed external diameter ranges of the cartridge bag 303 and/or the tubular body 310.

**In** the embodiment of Fig. 7B, there are 14 ribs 322 equally spaced at an angle of about 25.71 degrees or less between two consecutive ribs. Other numbers of ribs 322 may be between 3 and 24, preferably between 8 and 24, between 12 and 24 or between 16 and 24. Other angles between two consecutive ribs may be between 15 and 120 degrees. Preferred angles can be derived by dividing 360 degrees by a number of ribs from the above-disclosed umber of ribs.

In the embodiment of Fig. 7C, the piston 320 has a length along the longitudinal axis A of about 18 mm or less. Other lengths of the piston 320 may be about 50 mm or less, 40 mm or less, 30 mm or less, and 20 mm or less. The distal end of the piston 320 may be flat, where the edges of the distal end of the piston 320 form 90 degrees with the longitudinal axis or 180 degrees between two opposite edges (with respect to the longitudinal axis A) of the distal end of the piston 320, or the distal end of the piston 320 may be concave, for example the edges of the distal end form 80 degrees with the longitudinal axis or 160 degrees between two opposite edges (with respect to the longitudinal axis A). Other angles between said opposite edges of the distal end of the piston 320 may be between 120 and 180 degrees, between 130 and 180 degrees, between 140 and 180 degrees, between 160 and 180 degrees, and between 170 and 180 degrees.

Fig. 7C shows the opening 321 being conical and having a cone angle or opening angle of 4 degrees, wherein the angle is facing in direction from the proximal end to the distal end of the piston 320, preferably in the longitudinal direction. Other cone angles may be 60 degrees or less, 50 degrees or less, 40 degrees or less, 30 degrees or less, 20 degrees or less, 10 degrees or less, and 5 degrees or less, as well as any other cone angle derived from an external diameter (or respective radius) of the above-disclosed external diameter ranges of the piston 320 and from a length from the above-disclosed lengths of the piston 320. The edges 323 of the piston 320 may be rounded, wherein the rounded edge may be representative of part of a circle having a radius of about 6 mm or more. Other radii may be 2 mm or more, 4 mm or more, 8 mm or more, 10 mm or more and 12 mm or more.

In the embodiment of Fig. 7D, the piston 320 comprises a proximal part and distal part. The distal part of the piston 320 may have a length of about 12 mm or less. Other lengths may be about 40 mm or less, 30 mm or less, 20 mm or less, 10 mm or less, etc.. The proximal part of the piston 320 may have a length of about 6 mm or less. Other lengths may be about 40 mm or less, 30 mm or less, 20 mm or less, 10 mm or less, etc. Both lengths of the proximal and distal parts of the piston 320 may be derived from the above-disclosed lengths of the piston 320 being the sum of said both lengths.

Figs. 7B and 7D show that each of the ribs 322 comprises one or more ribs. Fig. 7B shows the one or more ribs in each of the ribs 322 being parallel. Fig. 7D shows the one or more ribs in each of the ribs 322 having an angle between them of 3 degrees or less. Other angles may be 20 degrees or less, 15 degrees or less, 10 degrees or less, 8 degrees or less, 6 degrees or less and 4 degrees or less.

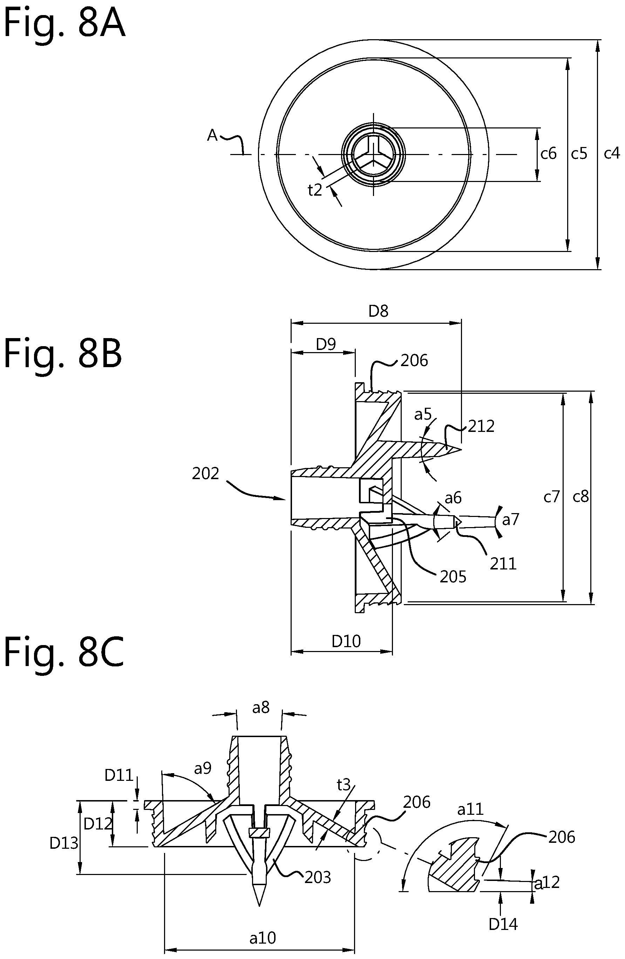

The following embodiments will be described with reference to Figs. 8A, 8B and 8C, which show respectively cross-sectional views of a cartridge cap of the cartridge assembly shown in Figs. 4A and 4B.

In the embodiment of Fig. 8A, the widest end or proximal end of the cap body 201 has a diameter of about 42 mm. The widest end or proximal end of the cap body 201 may have a diameter equal to or less than the internal diameter of the tubular body 310 and/or the external diameter of the cartridge bag 303, i.e., any of the ranges disclosed above between 10 to 100 mm. Furthermore, a narrow end or distal end of the cap body 201 may have a diameter in the range of about 5-20 mm. Preferred ranges may be 5-15 mm, 5-12 mm, 5-10 mm, 7-15 mm, 7-12 mm, 7-10mm and so on.

Fig. 8A shows the cartridge cap 200 comprising the flange 207 having a diameter of about 50 mm. The flange 207 may have a diameter equal to or larger than the internal diameter of the tubular body 310 (i.e., any of the ranges disclosed above between 10 to 100 mm), preferably equal to or larger than an external diameter of the tubular body 310. The cartridge cap 200 may comprise a bridge 205 mounted on the inner surface 220 of the cartridge cap 200 as disclosed above. In Fig. 8A, the bridge 205 radially extending from the longitudinal axis A to a plurality of parts of the inner surface 220 or vice versa. Each of said extension may have a width in a radial direction in the range of about 1-10 mm, preferably about 1-8 mm, 1-6 mm, 1-4mm, and more preferably is about 2.3 mm.

Fig. 8A shows that the plurality of rods 210 are arranged on the inner surface 220 of the cap body 201 on the inner surface 220 of the cap body 201 at a distance between any two farthest rods of the plurality of rods in the radial direction is about 11.70 mm. Said distance between the two farthest rods may be derived as double the distance between any of the plurality of rods 210 and the longitudinal axis A, e.g. when the plurality of rods 210 are equally spaced from the longitudinal axis A. The plurality of rods 210 may be arranged between the wide end (i.e., proximal end) and the narrow end (i.e., distal end) of the cap body 201 (i.e. having a distance from the longitudinal axis A larger than half a diameter from any of the above ranges of the narrow end or distal of the cap body 201 and smaller than half a diameter from any of the above ranges of the wider end or proximal end of the cap body 201), preferably halfway between the two ends of the cap body 201.

In the embodiment of Fig. 8B, it is shown that the cartridge cap 200 comprises a dispensing outlet 202 extending in a longitudinal direction around the longitudinal axis A, e.g. a longitudinal tube extending from the narrow end or distal end of the cap body 201 along the longitudinal axis A. The length of the dispensing outlet 202 in the longitudinal direction is shown to be 14 mm. Said length may be in the range of 5-20 mm, 5-15 mm, 5-10 mm, 7-20 mm, 7-15 mm, 12-20 mm, and so on. A distance between a distal end of the dispensing outlet 202 (i.e., to which a nozzle may be connected) and an outer surface of the bridge 205 (i.e., facing away from the inner surface 220 of the cap body 201) is 22 mm. Said distance may be in a range of 10-40 mm, 10-30 mm, 10-25 mm, 10-20 mm, 10-15 mm, 15-40 mm, 15-30 mm, 15-25 mm, 15-20 mm, and so on.

Fig. 8B shows a plurality of rods 210 one of which has a sharp end 212 having a bevel angle of about 34 degrees. The bevel angle of a sharp end 212 may be equal to or less than about 50, 40, 30, 20, 10 or 5 degrees. Another rod of the plurality of rods 210 has a blunt end 211 having a bevel angle of about 80 degrees. The bevel angle of a blunt end 211 may be equal to or greater than about 51, 60, 70, 75, 80, 85 or 90 degrees. The plurality of rods 210 may extend in the longitudinal direction having a generally cylindrical or conical shape. In other words, the plurality of rods 210 may have a cone angle equal to or less than about 10, 9, 8, 7,6, 5, 4, 3, 2 or 1 degrees, where 0 degrees corresponds to a cylindrical rod. The cone angle in this embodiment is formed at the tip of the plurality of rods 210, preferably in the direction of the longitudinal direction (i.e. in the direction from the widest end (i.e., proximal end) to the narrow end (i.e., distal end) of the cap body 201.

Fig. 8B shows the annular wall of the cartridge cap 200 having a diameter of 46 mm. The annular wall may have a diameter equal to or less than the internal diameter of the tubular body 310 and/or the external diameter of the cartridge bag 303, i.e., any of the ranges disclosed above between 10 to 100 mm. The cartridge cap 200 may further comprise outer rings 206, wherein the diameter of the cartridge cap 200 including the outer rings 206 is 47 mm. In other words, the outer rings 206 may have an protruding distance (i.e., being radially protruding from the annular wall) of about 1mm or less, preferably 4 mm or less, 3 mm or less, 2 mm or less, 1.5 mm or less, 0.5 mm or less, and so on.

In the embodiment of Fig. 8C, the dispensing outlet 202 has a conical shape with a cone angle of about 3 degrees or less, the cone angle facing a direction from the cap body 201 to the dispensing outlet 202, preferably the direction being the longitudinal direction. Said cone angle of the dispensing outlet 202 may be in the range of about 10 mm or less, 8 mm or less, 6 mm or less, 4 mm or less, 3 mm or less, 2 mm or less, and so on, where 0 degrees corresponds to a dispensing outlet 202 with parallel walls. Fig. 8C shows the cap body 201 having an angle between an outer surface or inner surface 220 and the annular wall or longitudinal axis A of about 61.4 degrees or less. Said angle may be about 90, 80, 70, 65, 60, 55, 50 and so on. Furthermore, the annular wall is shown to have a conical shape having a cone angle of 3 degrees or less, the cone angle facing in a direction from the cap body 201 to the dispensing outlet 202, preferably the direction being the longitudinal direction. The annular wall may have a cone angle equal to or less than about 10, 9, 8, 7,6 , 5, 4, 3, 2 or 1 degrees.

Fig. 8C shows the outer rings 206 having a width or thickness in the longitudinal direction of 1 mm or less. The outer rings 206 may have a width or thickness equal to or less than about 10, 9, 8, 7, 6, 5, 4, 3, 2 or 1 mm. Furthermore, the outer rings 206 may be protruding radially at an angle with the widest end or proximal end of the cap body 201 of 10, 9, 8, 7, 6, 5, 4, 3, 2, 1 degrees or less, preferably an angle of 2 degrees. Furthermore, the outer rings 206 may be protruding in the longitudinal direction forming an angle with the widest end or proximal end of the cap body 201 of 110, 109, 108, 107, 106, 105, 104, 103, 102, 101 degrees or more, preferably an angle of 118 degrees.

Fig. 8C shows the cartridge cap 200 having a flange 207 having a width in the longitudinal direction of about 2 mm or less. The flange 207 may have a width equal to or less than 10, 9, 8, 7, 6, 5, 4, 3, 2 or 1 mm. The annular wall may have a width in the longitudinal direction equal to or less than about 20, 18, 16, 14, 12, 10, 8, 6 or 4 mmm preferably is about 10 mm. The cap body 201 may have a tube thickness (i.e. a distance between the exterior and interior surfaces) equal to or less than about 6, 5, 4, 3, 2, 1 mm, preferably is about 2 mm. The one or more side walls or wings 203 extending from the plurality of rods 210 may have a distance in the longitudinal direction between a point farthest away from the inner surface 220 of the cap body 201 and the narrow end (i.e. distal end) of the cap body 201 or a proximal end of the dispensing outlet 202, which may be connected to the narrow end or distal end of the cap body 201, equal to or less than about 30, 25, 20, 18, 16, 14, 12, 10, 8 or 6 mm, preferably is about 16 mm.

It will be appreciated that aspects of the present invention include embodiments in which the features described above are provided alone or in combination with other features described here. For example, the cartridge 300 described above can be provided in a cartridge assembly 100, the assembly 100 having a cartridge cap 200 assembly that sealably connects to the cartridge 300 as described herein. In such assemblies, the cartridge cap 200 comprises a cap body 201 configured to allow contents of the cartridge bag 303 to be extracted there through. The cartridge 300 can be employed in cartridge assemblies with different caps.

Moreover, the cartridge cap 200 described above may be provided in a cartridge assembly 100, the assembly 100 having a cartridge 300 comprising a cartridge bag 303 as described herein. In such assemblies, the cartridge cap 200 is configured to open the cartridge bag 303 in the cartridge 300 when the cartridge bag 303 is pressed towards the cartridge cap 200. The cartridge cap 200 can be employed in cartridge assemblies with different cartridges and cartridge bags.

While the invention has been described with reference to exemplary or preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular or preferred embodiments or preferred features disclosed, but that the invention will include all embodiments falling within the scope of the appended claims.

## Claims

1. A disposable cartridge for use with an extrusion gun, the cartridge comprising:
a hollow tubular body (310) configured to receive a flexible bag (303) containing contents to be expelled from the cartridge, wherein the body (310) comprises a cartridge wall extending in a longitudinal direction (A); and
a piston (320) provided in the body at a proximal end, the piston being sealably displaceable along the cartridge wall in the longitudinal direction (A),
**characterised in, that** the tubular body is adapted such that a main part thereof, substantially made of any one or combination of paperbased, biobased, biodegradable, bioplastic, compostable, renewable and recycled material, is manually removable from the cartridge,
wherein the tubular body is adapted to be divided into a proximal portion (311) and a distal portion (312), wherein the proximal portion (311) forms the main part,
wherein the tubular body comprises means to separate the distal portion and the proximal portion from each other,
wherein the separation means comprises a tear line and/or a tear strip (305) extending in a peripheral direction and releasably connecting the proximal portion (311) and the distal portion (312).

2. The cartridge according to claim 1, wherein a width (W) of the tear strip in the longitudinal direction (A) ranges from about 0.1 mm to about 50 mm, preferably ranges from about 10 mm to about 30 mm, more preferably is about 20 mm and/or another width of the tear line in the longitudinal direction (A) ranges from about 0.1 mm to about 10 mm, preferably ranges from about 0.1 mm to about 3 mm, more preferably is about 1 mm.

3. The cartridge according to claim 1, wherein the size of the proximal portion (311) in the longitudinal direction (A) ranges from about 150 mm to about 250 mm, preferably ranges from about 175 mm to about 200 mm, more preferably is about 190 mm, and/or the size of the distal portion (312) in the longitudinal direction (A) ranges from about 0.1 mm to about 30 mm, preferably ranges from about 10 mm to about 20 mm, more preferably is about 15 mm.

4. The cartridge according any one of the preceding claims, wherein the piston (320) comprises an opening (321) configured for accommodating a proximal end of the cartridge bag (303), preferably the proximal end of the cartridge bag (303) being sealed/closed with a sealing/closing means.

5. The cartridge according to any one of the preceding claims, comprising indication marks formed on an outer peripheral surface of the tubular body, wherein the marks are associated with instructions to remove the main part of the tubular body, for example to divide the tubular body into a proximal portion (311) and a distal portion (312), or indicate the location of the means to remove the main part of the tubular body for example the means to separate the distal portion and the proximal portion from each other.

6. The cartridge according to any one of the preceding claims, wherein the tubular body comprises means (304) to prevent displacement of the piston (320) through an open proximal end of the tubular body.

7. The cartridge according to any one of the preceding claims, wherein the tubular body (310) is substantially made of a paper-based material.

8. A cartridge assembly comprising a cartridge according to any one of the preceding claims, and a flexible bag (303) containing content to be expelled from the cartridge provided in the tubular body, preferably the content of the flexible bag contains at least one of the group containing caulk, sealant, grout and adhesive, preferably the flexible bag contains silicon.

9. The cartridge assembly according to claim 7, further comprising a cartridge cap (200) sealably connected to the distal portion (312), wherein the cartridge is configured to allow expulsion of the contents through an opening in the cartridge cap by displacement of the piston (320),
wherein the cartridge cap (200) further comprises a plurality of rods extending in the longitudinal direction (A) from an inner surface (220) of the cap, wherein at least one piercing rod of the plurality of rods is adapted to pierce the flexible bag when the flexible bag is pressed against the at least one rod by displacement of the piston (320).

10. The cartridge assembly according to claim 9, wherein the plurality of rods consists of piercing and blunt rods having tips with different sharpness.

11. The cartridge assembly according to claim 9 or 10, wherein the at least one piercing rod extends into the main part (311) of the tubular body (310).

12. A method for disposal of a cartridge for use in an extrusion gun, preferably according to any one of the preceding claims 1-7, the cartridge comprising:
a hollow tubular body (310) configured to receive a flexible bag (303) containing contents to be expelled from the cartridge, wherein the body (310) comprises a cartridge wall extending in a longitudinal direction (A); and
a piston (320) provided in the body at a proximal end, the piston being sealably displaceable along the cartridge wall in the longitudinal direction (A),
the method comprising the step of removing a main part of the tubular body, substantially made of any one or combination of paperbased, biobased, biodegradable, bioplastic, compostable, renewable and recycled material, from the cartridge, by dividing the tubular body (310) into a proximal portion (311) forming the main part and a distal portion (312), by separating the distal portion and the proximal portion from each other using a tear line and/or a tear strip (305) extending in a peripheral direction and releasably connecting the proximal portion (311) and the distal portion (312).

## Patentansprüche

1. Einweg-Kartusche zur Verwendung mit einer Extrusionspistole, wobei die Kartusche Folgendes aufweist:
einen hohlen röhrenförmigen Körper (310), der so konfiguriert ist, dass er einen flexiblen Beutel (303) aufnimmt, der aus der Kartusche auszustoßenden Inhalt enthält, wobei der Körper (310) eine Kartuschenwand aufweist, die sich in einer Längsrichtung (A) erstreckt; und
einen Kolben (320), der in dem Körper an einem proximalen Ende vorgesehen ist, wobei der Kolben abdichtbar entlang der Kartuschenwand in der Längsrichtung (A) verschiebbar ist,
**dadurch gekennzeichnet, dass** der röhrenförmige Körper so angepasst ist, dass ein Hauptteil davon, der im Wesentlichen aus einem oder einer Kombination aus papierbasiertem, biobasiertem, biologisch abbaubarem, Biokunststoff-, kompostierbarem, erneuerbarem und recyceltem Material besteht, manuell aus der Kartusche entfernt werden kann,
wobei der röhrenförmige Körper daran angepasst ist, dass er in einen proximalen Abschnitt (311) und einen distalen Abschnitt (312) geteilt werden kann, wobei der proximale Abschnitt (311) den Hauptteil bildet,
wobei der röhrenförmige Körper Mittel aufweist, um den distalen Abschnitt und den proximalen Abschnitt voneinander zu trennen,
wobei das Trennmittel eine Aufreißlinie und/oder einen Aufreißstreifen (305) aufweist, der sich in einer Umfangsrichtung erstreckt und den proximalen Abschnitt (311) und den distalen Abschnitt (312) lösbar verbindet.

2. Kartusche nach Anspruch 1, wobei eine Breite (W) des Aufreißstreifens in der Längsrichtung (A) im Bereich von etwa 0,1 mm bis etwa 50 mm, vorzugsweise im Bereich von etwa 10 mm bis etwa 30 mm, besonders bevorzugt etwa 20 mm, liegt und/oder eine andere Breite der Aufreißlinie in der Längsrichtung (A) im Bereich von etwa 0,1 mm bis etwa 10 mm, vorzugsweise im Bereich von etwa 0,1 mm bis etwa 3 mm, besonders bevorzugt etwa 1 mm liegt.

3. Kartusche nach Anspruch 1, wobei die Größe des proximalen Abschnitts (311) in Längsrichtung (A) im Bereich von etwa 150 mm bis etwa 250 mm liegt, vorzugsweise im Bereich von etwa 175 mm bis etwa 200 mm, besonders bevorzugt etwa 190 mm, und/oder die Größe des distalen Abschnitts (312) in Längsrichtung (A) im Bereich von etwa 0,1 mm bis etwa 30 mm liegt, vorzugsweise im Bereich von etwa 10 mm bis etwa 20 mm, besonders bevorzugt etwa 15 mm.

4. Kartusche nach einem der vorhergehenden Ansprüche, wobei der Kolben (320) eine Öffnung (321) aufweist, die zur Aufnahme eines proximalen Endes des Kartuschenbeutels (303) konfiguriert ist, wobei vorzugsweise das proximale Ende des Kartuschenbeutels (303) mit einem Versiegelungs-/Verschlussmittel versiegelt/verschlossen ist.

5. Die Kartusche nach einem der vorhergehenden Ansprüche, die Anzeigemarkierungen aufweist, die auf einer äußeren Umfangsfläche des rohrförmigen Körpers ausgebildet sind, wobei die Markierungen mit Anweisungen zum Entfernen des Hauptteils des rohrförmigen Körpers verbunden sind, um beispielsweise den rohrförmigen Körper in einen proximalen Abschnitt (311) und einen distalen Abschnitt (312) zu teilen, oder den Ort der Mittel zum Entfernen des Hauptteils des rohrförmigen Körpers anzeigen, beispielsweise die Mittel zum Trennen des distalen Abschnitts von dem proximalen Abschnitt.

6. Kartusche nach einem der vorhergehenden Ansprüche, wobei der röhrenförmige Körper Mittel (304) aufweist, die eine Verschiebung des Kolbens (320) durch ein offenes proximales Ende des röhrenförmigen Körpers verhindern.

7. Kartusche nach einem der vorhergehenden Ansprüche, wobei der rohrförmige Körper (310) im Wesentlichen aus einem Material auf Papierbasis besteht.

8. Kartuschenanordnung mit einer Kartusche nach einem der vorhergehenden Ansprüche und einem flexiblen Beutel (303), der einen aus der Kartusche auszustoßenden Inhalt enthält, der in dem rohrförmigen Körper vorgesehen ist, wobei der Inhalt des flexiblen Beutels vorzugsweise mindestens eines aus der Gruppe enthält, die Dichtungsmasse, Dichtungsmittel, Mörtel und Klebstoff enthält, wobei der flexible Beutel vorzugsweise Silikon enthält.

9. Kartuschenanordnung nach Anspruch 7, die ferner eine Kartuschenkappe (200) aufweist, die abdichtbar mit dem distalen Abschnitt (312) verbunden ist, wobei die Kartusche so konfiguriert ist, dass sie das Ausstoßen des Inhalts durch eine Öffnung in der Kartuschenkappe durch Verschiebung des Kolbens (320) ermöglicht,
wobei die Kartuschenkappe (200) ferner eine Vielzahl von Stäben aufweist, die sich in der Längsrichtung (A) von einer Innenfläche (220) der Kappe aus erstrecken, wobei mindestens ein stechender Stab der Vielzahl von Stäben dafür ausgelegt ist, den flexiblen Beutel zu durchstoßen, wenn der flexible Beutel durch Verschieben des Kolbens (320) gegen den mindestens einen Stab gedrückt wird.

10. Kartuschenanordnung nach Anspruch 9, wobei die Vielzahl von Stäben aus stechenden und stumpfen Stäben besteht, die Spitzen mit unterschiedlicher Schärfe aufweisen.

11. Kartuschenanordnung nach Anspruch 9 oder 10, bei der sich der mindestens eine stechende Stab in den Hauptteil (311) des rohrförmigen Körpers (310) erstreckt.

12. Verfahren zum Entleeren einer Kartusche zur Verwendung in einer Extrusionspistole, vorzugsweise nach einem der vorangehenden Ansprüche 1-7, wobei die Kartusche aufweist
einen hohlen röhrenförmigen Körper (310), der so konfiguriert ist, dass er einen flexiblen Beutel (303) aufnimmt, der aus der Kartusche auszustoßenden Inhalt enthält, wobei der Körper (310) eine Kartuschenwand aufweist, die sich in einer Längsrichtung (A) erstreckt; und
einen Kolben (320), der in dem Körper an einem proximalen Ende vorgesehen ist, wobei der Kolben abdichtbar entlang der Kartuschenwand in der Längsrichtung (A) verschiebbar ist,
wobei das Verfahren einen Schritt des Entfernens eines Hauptteils des rohrförmigen Körpers, der im Wesentlichen aus einem oder einer Kombination aus papierbasiertem, biobasiertem, biologisch abbaubarem, Biokunststoff-, kompostierbarem, erneuerbarem und recyceltem Material besteht, aus der Kartusche aufweist, durch Teilen des rohrförmigen Körpers (310) in einen proximalen Abschnitt (311), der den Hauptteil bildet, und einen distalen Abschnitt (312), durch Trennen des distalen Abschnitts von dem proximalen Abschnitt unter Verwendung einer Aufreißlinie und/oder eines Aufreißstreifens (305), der sich in einer Umfangsrichtung erstreckt und den proximalen Abschnitt (311) und den distalen Abschnitt (312) lösbar verbindet.

## Revendications

1. Cartouche jetable à utiliser avec un pistolet d'extrusion, la cartouche comprenant :
un corps tubulaire creux (310) configuré pour recevoir une poche flexible (303) contenant un contenu devant être expulsé de la cartouche, dans laquelle le corps (310) comprend une paroi de cartouche s'étendant dans une direction longitudinale (A) ; et un piston (320) prévu dans le corps au niveau d'une extrémité proximale, le piston pouvant être déplacé de manière étanche le long de la paroi de cartouche dans la direction longitudinale (A),
**caractérisée en ce que** le corps tubulaire est adapté de telle sorte qu'une partie principale de celui-ci, sensiblement constituée de l'un quelconque ou d'une combinaison de matériaux à base de papier, biosourcés, biodégradables, bioplastiques, compostables, renouvelables et recyclés, puisse être retirée manuellement de la cartouche,
dans laquelle le corps tubulaire est adapté pour être divisé en une partie proximale (311) et une partie distale (312), dans laquelle la partie proximale (311) forme la partie principale,
dans laquelle le corps tubulaire comprend des moyens pour séparer la partie distale et la partie proximale l'une de l'autre,
dans laquelle les moyens de séparation comprennent une ligne de déchirement et/ou une bande de déchirement (305) s'étendant dans une direction périphérique et reliant de manière libérable la partie proximale (311) et la partie distale (312).

2. Cartouche selon la revendication 1, dans laquelle une largeur (W) de la bande de déchirement dans la direction longitudinale (A) est dans la plage d'environ 0,1 mm à environ 50 mm, de préférence est dans la plage d'environ 10 mm à environ 30 mm, de manière plus préférée est d'environ 20 mm et/ou une autre largeur de la ligne de déchirement dans la direction longitudinale (A) est dans la plage d'environ 0,1 mm à environ 10 mm, de préférence est dans la plage d'environ 0,1 mm à environ 3 mm, de manière plus préférée est d'environ 1 mm.

3. Cartouche selon la revendication 1, dans laquelle la taille de la partie proximale (311) dans la direction longitudinale (A) est dans la plage d'environ 150 mm à environ 250 mm, de préférence dans la plage d'environ 175 mm à environ 200 mm, de manière plus préférée est d'environ 190 mm, et/ou la taille de la partie distale (312) dans la direction longitudinale (A) est dans la plage d'environ 0,1 mm à environ 30 mm, de préférence est dans la plage d'environ 10 mm à environ 20 mm, de manière plus préférée est d'environ 15 mm.

4. Cartouche selon l'une quelconque des revendications précédentes, dans laquelle le piston (320) comprend une ouverture (321) configurée pour recevoir une extrémité proximale de la poche de cartouche (303), de préférence l'extrémité proximale de la poche de cartouche (303) étant scellée/fermée avec des moyens de scellement/fermeture.

5. Cartouche selon l'une quelconque des revendications précédentes, comprenant des marques d'indication formées sur une surface périphérique extérieure du corps tubulaire, dans laquelle les marques sont associées à des instructions pour retirer la partie principale du corps tubulaire, par exemple pour diviser le corps tubulaire en une partie proximale (311) et une partie distale (312), ou indiquer l'emplacement des moyens pour retirer la partie principale du corps tubulaire, par exemple les moyens pour séparer la partie distale et la partie proximale l'une de l'autre.

6. Cartouche selon l'une quelconque des revendications précédentes, dans laquelle le corps tubulaire comprend des moyens (304) pour empêcher un déplacement du piston (320) à travers une extrémité proximale ouverte du corps tubulaire.

7. Cartouche selon l'une quelconque des revendications précédentes, dans laquelle le corps tubulaire (310) est sensiblement réalisé en un matériau à base de papier.

8. Ensemble de cartouche comprenant une cartouche selon l'une quelconque des revendications précédentes, et une poche flexible (303) contenant un contenu destiné à être expulsé de la cartouche prévue dans le corps tubulaire, de préférence le contenu de la poche flexible contient au moins l'un du groupe contenant du mastic, de l'agent d'étanchéité, du coulis et de l'adhésif, de préférence la poche flexible contient du silicium.

9. Ensemble de cartouche selon la revendication 7, comprenant en outre un capuchon de cartouche (200) relié de manière étanche à la partie distale (312), dans lequel la cartouche est configurée pour permettre l'expulsion du contenu à travers une ouverture dans le capuchon de cartouche par déplacement du piston (320),
dans lequel le capuchon de cartouche (200) comprend en outre une pluralité de tiges s'étendant dans la direction longitudinale (A) à partir d'une surface intérieure (220) du capuchon, dans lequel au moins une tige de perçage parmi la pluralité de tiges est adaptée pour percer la poche flexible lorsque la poche flexible est pressée contre la au moins une tige par un déplacement du piston (320).

10. Ensemble de cartouche selon la revendication 9, dans lequel la pluralité de tiges est constituée de tiges de perçage et émoussées présentant des pointes avec une précision différente.

11. Ensemble de cartouche selon la revendication 9 ou 10, dans lequel la au moins une tige de perçage s'étend dans la partie principale (311) du corps tubulaire (310).

12. Procédé de mise au rebut d'une cartouche à utiliser dans un pistolet d'extrusion, de préférence selon l'une quelconque des revendications 1 à 7, la cartouche comprenant :
un corps tubulaire creux (310) configuré pour recevoir une poche flexible (303) contenant un contenu devant être expulsé de la cartouche, dans lequel le corps (310) comprend une paroi de cartouche s'étendant dans une direction longitudinale (A) ; et
un piston (320) prévu dans le corps au niveau d'une extrémité proximale, le piston pouvant être déplacé de manière étanche le long de la paroi de cartouche dans la direction longitudinale (A),
le procédé comprenant l'étape consistant à retirer de la cartouche une partie principale du corps tubulaire, sensiblement constituée de l'un quelconque ou d'une combinaison de matériaux à base de papier, biosourcés, biodégradables, bioplastiques, compostables, renouvelables et recyclés, en divisant le corps tubulaire (310) en une partie proximale (311) formant la partie principale et une partie distale (312), en séparant la partie distale et la partie proximale l'une de l'autre à l'aide d'une ligne de déchirement et/ou d'une bande de déchirement (305) s'étendant dans une direction périphérique et reliant de manière libérable la partie proximale (311) et la partie distale (312).
